# EUROPÄISCHE PATENTSCHRIFT

(11) **EP 1 242 861 B1**
(45) Veröffentlichungstag und Bekanntmachung des Hinweises auf die Patenterteilung: **03.01.2007**
(21) Anmeldenummer: 00989809.9
(22) Anmeldetag: 28.11.2000
(51) Int. Cl.: G06F 1/12, G06F 1/14, G05B 19/00

(54) **VERFAHREN ZUM SYNCHRONISIEREN VON MINDESTENS ZWEI STEUEREINRICHTUNGEN**
METHOD FOR SYNCHRONIZING AT LEAST TWO CONTROL DEVICES
PROCEDE PERMETTANT DE SYNCHRONISER AU MOINS DEUX SYSTEMES DE COMMANDE

(30) Priorität: 30.11.1999 DE 19957551
(43) Veröffentlichungstag der Anmeldung: 25.09.2002
(73) Patentinhaber: SIEMENS AKTIENGESELLSCHAFT, 80333 München (DE)
(72) Erfinder: HAIMERL, Michael, 93413 Cham (DE); PÖHMERER, Wolf-Dieter, 93051 Regensburg (DE); REICHL, Hans-Jürgen, 94330 Salching (DE); SAGMEISTER, Ulli, Christian, 84389 Postmünster (DE); TEINER, Markus, 93057 Regensburg (DE)
(86) Internationale Anmeldenummer: PCT/DE2000/004226
(87) Internationale Veröffentlichungsnummer: WO 2001/040913

(56) Entgegenhaltungen:
- EP-A- 0 613 271
- EP-A- 0 846 993
- DE-A- 19 815 647
- US-A- 5 402 394
- US-A- 5 748 941
- US-A- 5 918 040
- PATENT ABSTRACTS OF JAPAN vol. 017, no. 105 (P-1495), 3. März 1993 (1993-03-03) & JP 04 294413 A (FUJI FACOM CORP), 19. Oktober 1992 (1992-10-19)

## Beschreibung

Die Erfindung betrifft ein Verfahren zum Synchronisieren von mindestens zwei Steuereinrichtungen.

Moderne Kraftfahrzeuge sind häufig mit einer Vielzahl an Steuereinrichtungen ausgestattet. Jeweils eine oder mehrere Steuereinrichtungen sind zum Steuern von Motorbetriebsfunktionen und gegebenenfalls zum Ansteuern von Drosselklappen, elektromechanischen Stellantrieben oder eines Kurbelwellen Starter-Generators (KSG) oder weiterer Aktuatoren vorgesehen.

Verschiedene Stellglieder , wie z. B. Einspritzventile, Zündkerzen und Gaswechselventile, werden von der oder den Steuereinrichtungen abhängig von der Winkelstellung der Kurbelwelle der Brennkraftmaschine angesteuert.

Bei Brennkraftmaschinen ist daher eine Sensoreinrichtung vorgesehen, die einen inkrementalen Winkelgeber und einen Meßaufnehmer hat, der ein Meßsignal erzeugt. Das Meßsignal ist vorzugsweise eine Pulsfolge.

Die einzelnen Steuereinrichtungen sind über eine Signalleitung mit der Sensoreinrichtung verbunden und empfangen das Meßsignal. Sie verarbeiten das Meßsignal weiter, indem sie die Pulse zählen.

Abhängig davon wann die jeweilige Steuereinrichtung mit der Zählung der Pulse beginnt und abhängig von fehlerhaften Erfassungen oder auch Nichterfassungen von einzelnen Pulsen können sich die Zählerstände oder auch daraus abgeleitete Winkelwerte der aufbereiteten Meßsignale in den einzelnen Steuereinrichtungen unterscheiden.

Zum Austausch von Informationen sind einzelne Steuereinrichtungen über einen Datenbus, wie beispielsweise dem CAN-Bus, verbunden. Es werden beispielsweise von der Steuereinrichtung zum Steuern von Motorbetriebsfunktionen Steuerbefehle zum Ansteuern von Gaswechselventile zu vorgegebenen Winkeln der Kurbelwelle übertragen. Ein zuverlässiger Betrieb des Kraftfahrzeugs, in dem die Steuereinrichtungen angeordnet sind, kann nur gewährleistet werden, wenn die aufbereiteten Meßsignale in den einzelnen Steuereinrichtungen synchronisiert sind.

Aus der DE 41 40 017 C2 ist ein Verfahren zum Betreiben von über einen Datenbus durch seriellen Datenaustausch miteinander kommunizierenden Rechnereinheiten bekannt, von denen jede ein eigenes Zeitgebersystem aufweist. In den Datenbus wird einmalig oder wiederholt ein Zeitregistrierungssignal eingespeist. Jede Rechnereinheit speichert bei Identifizierung des Zeitregistrierungs-Startsignals den eigenen Zeitwert. Eine der Rechnereinheiten sendet den eigenen gespeicherten Zeitwert anschließend an die andern Rechnereinheiten. Die anderen Recheneinheiten synchronisieren ihre eigene Zeitbasis abhängig von dem eigenen gespeicherten Zeitwert und dem Zeitwert der anderen Rechnereinheit. Für die Rechnereinheiten ist keine zentrale Taktversorgung vorgesehen.

Aus der Druckschrift EP 0 846 993 A1 ist ein Verfahren zum Synchronisieren von mindestens zwei Steuereinrichtungen bekannt. Die darin enthaltenen Einrichtungen erzeugen voneinander unabhängige Meßsignale, die unabhängig voneinander der ersten, bzw. der zweiten Steuereinrichtung zugeführt werden. Die Synchronisation der beiden Steuereinrichtungen wird dadurch erzielt, dass die erste Steuereinrichtung ein erstes Meßsignal und die zweite Steuereinrichtung ein zweites Meßsignal erhält.

Die Aufgabe der Erfindung ist es, ein Verfahren zum Synchronisieren von mindestens zwei Steuereinrichtungen zu schaffen, das zuverlässig und einfach ist.

Die Aufgabe wird erfindungsgemäß durch die Merkmale der unabhängigen Patentansprüche gelöst. Vorteilhafte Ausgestaltungen der Erfindung sind in den Unteransprüchen gekennzeichnet.

Ausführungsbeispiele der Erfindung sind anhand der schematischen Zeichnungen näher erläutert. Es zeigen:
- Figur 1: eine Brennkraftmaschine mit einer zugeordneten ersten und zweiten Steuereinrichtung,
- Figur 2: ein Ablaufdiagramm zum Ermitteln eines ersten aufbereiteten Meßsignals,
- Figur 3: ein Ablaufdiagramm zum Ermitteln eines zweiten aufbereiteten Meßsignals,
- Figur 4: ein zeitbezogenes Ablaufdiagramm zum Synchronisieren der ersten und zweiten Steuereinrichtung,
- Figur 5: ein weiteres Ablaufdiagramm zum Synchronisieren der ersten und zweiten Steuereinrichtung.

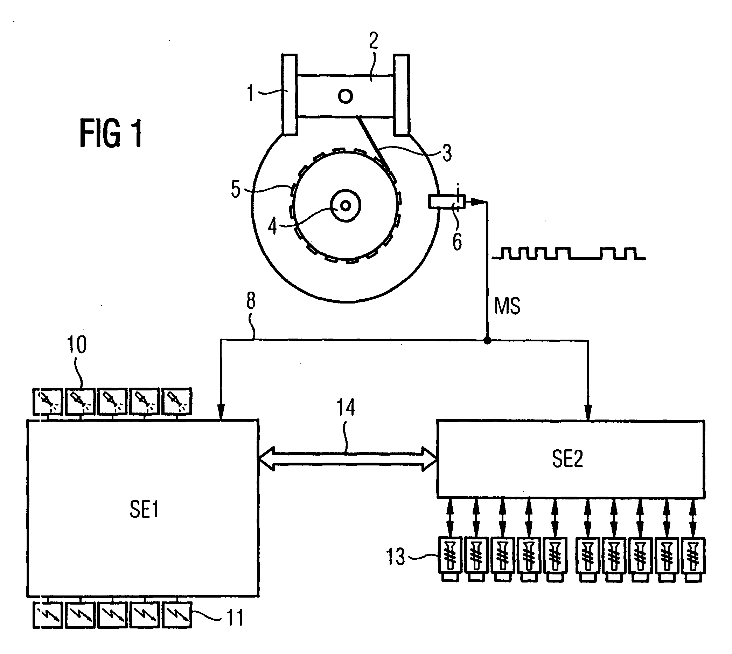

Eine Brennkraftmaschine (Figur 1) umfaßt einen Zylinder 1, in dem ein Kolben 2 beweglich angeordnet ist. Der Kolben 2 ist über eine Pleuelstange 3 mit einer Kurbelwelle 4 gekoppelt.

Auf der Kurbelwelle 4 ist ein Winkelgeber 5 angeordnet, der vorzugsweise als Zahnrad 5 ausgebildet ist. Das Zahnrad hat beispielsweise sechzig Zähne, die bis auf eine definierte Lücke gleich beabstandet sind.

Ein Meßaufnehmer 6, der vorzugsweise als Hallelement oder Induktivgeber ausgebildet ist, ist fest in dem Kurbelgehäuse der Brennkraftmaschine angeordnet und erzeugt ein pulsförmiges Meßsignal MS, wenn die Kurbelwelle 4 sich dreht. Das Meßsignal MS hat bei einer konstanten Drehzahl eine konstante Periodendauer der Pulse bis auf eine größere Periodendauer bedingt durch die Lücke im Zahnrad oder auch ein gleichmäßiges Puls-Pausen-Verhältnis bis auf eine längere Pause pro Umdrehung, bedingt durch die Lücke im Zahnrad. Diese längere Lücke oder auch größere Periodendauer dient als Synchronisierungssignal SYNC.

Eine erste Steuereinrichtung SE1 zum Steuern von Betriebsfunktionen des Motors ist vorgesehen. Der Steuereinrichtung sind Sensoren zugeordnet, die verschiedene Meßgrößen erfassen und jeweils den Meßwert der Meßgröße ermitteln. Die erste Steuereinrichtung SE1 ermittelt abhängig von mindestens einer Meßgröße ein oder mehrere Stellsignale, die jeweils ein Stellgerät steuern.

Die Sensoren sind beispielsweise ein Pedalstellungsgeber, ein Drosselklappenstellungsgeber, ein Luftmassenmesser, ein Temperatursensor, die Sensoreinrichtung oder weitere Sensoren.

Die Stellgeräte umfassen jeweils einen Stellantrieb und ein Stellglied. Der Stellantrieb ist ein elektromotorischer Antrieb, ein elektromagnetischer Antrieb oder ein weiterer dem Fachmann bekannter Antrieb. Die Stellglieder sind als Drosselklappe, als Einspritzventil 10, oder als Zündkerze 11 beispielsweise ausgebildet.

Die erste Steuereinrichtung SE1 ist über eine Signalleitung 8 mit dem Messaufnehmer 6 verbunden. Ferner ist sie über einen Bus 14, der vorzugsweise als CAN-Bus ausgebildet ist, mit einer zweiten Steuereinrichtung SE2 verbunden. Der Bus ist somit ein Kommunikationsmittel, das der ersten und zweiten Steuereinrichtung SE1, SE2 zugeordnet ist. Das Kommunikationsmittel kann auch einen Sender und einen Empfänger umfassen die der ersten und/oder zweiten Steuereinrichtung SE1, SE2 zugeordnet sind und die ein Funksignal senden oder empfangen.

Die zweite Steuereinrichtung ermittelt und erzeugt Stellsignale zum Ansteuern von elektromechanischen Stellantrieben 13 für Gaswechselventile der Brennkraftmaschine. Die zweite Steuereinrichtung SE2 kommuniziert über den Bus 14 mit der ersten Steuereinrichtung SE1. Die erste Steuereinrichtung SE1 gibt der zweiten Steuereinrichtung SE2 Informationen oder Steuerbefehle über den Öffnungsbeginn und das Öffnungsende der Gaswechselventile bezogen auf den Kurbelwellenwinkel der Kurbelwelle 4.

Die zweite Steuereinrichtung ist ebenfalls über die Signalleitung 8 mit dem Messaufnehmer 6 verbunden.

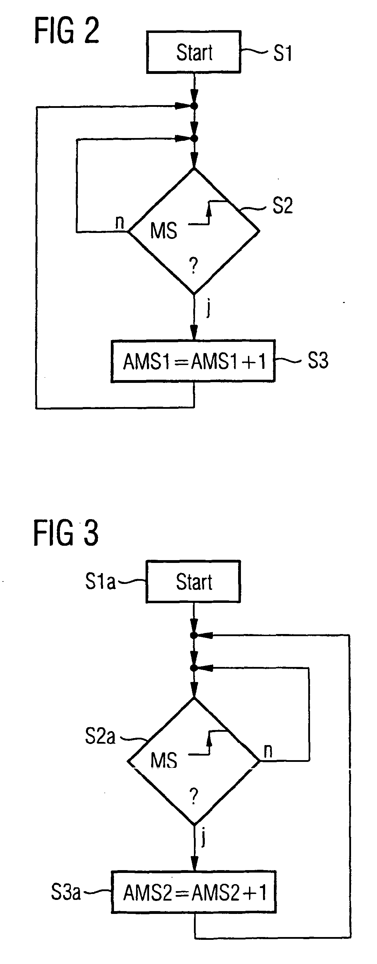

In Figur 2 ist ein Ablaufdiagramm eines Programms zum Aufbereiten des Meßsignals MS in der ersten Steuereinrichtung SE1 dargestellt. In einem Schritt S1 wird das Programm gestartet.

In einem Schritt S2 wird geprüft, ob das Meßsignal MS eine steigende Flanke aufweist. Ist dies nicht der Fall, so wird die Bedingung des Schrittes S2 erneut geprüft, ggf. nach einer vorgegebenen Verzögerungszeit. Ist die Bedingung des Schrittes S2 jedoch erfüllt, so wird ein erstes aufbereitetes Meßsignal um den Wert eins inkrementiert.

Vorzugsweise wird das aufbereitete erste Meßsignal AMS1 in dem Schritt S1 auf einen vorgegebenen Wert initialisiert (z. B. null). Der jeweils aktuelle Zählerstand des ersten aufbereiteten Meßsignals AMS1 ist ein besonders einfaches Maß für den Winkel der Kurbelwelle 4. Alternativ kann jedoch beispielsweise auch der Zählerwert in einen zugeordneten Winkelwert umgeformt werden, so daß das aufbereitete erste Meßsignal AMS 1 direkt einen Winkelwert aufweist. Eine weitere höhere Genauigkeit des aufbereiteten Meßsignals kann erreicht werden, in dem der Zählerwert oder Winkelwert zwischen zwei aufeinanderfolgenden Flanken des Meßsignals MS interpoliert wird.

Figur 3 zeigt das entsprechende Ablaufdiagramm des Programms, das in der zweiten Steuereinrichtung SE2 abgearbeitet wird. Das Programm wird in einem Schritt S1a gestartet, in dem ein zweites aufbereitetes Meßsignal AMS2 vorzugsweise initialisiert wird.

In einem Schritt S2a wird geprüft, ob das Meßsignal MS eine steigende Flanke aufweist. Ist dies nicht der Fall, so wird die Bedingung des Schrittes S2a, ggf. nach einer vorgegebenen Wartezeit, erneut geprüft. Ist dies jedoch der Fall, so wird in einem Schritt S3a das aufbereitete zweite Meßsignal AMS2 um den Wert 1 inkrementiert. Die Ausführungen zu dem ersten aufbereiteten Meßsignal AMS1 gelten sinngemäß für das zweite aufbereitete Meßsignal AMS2. In den Schritten S2 in Figur 2 und S2a in Figur 3 kann alternativ auch geprüft werden, ob das Messsignal MS eine fallende Flanke aufweist.

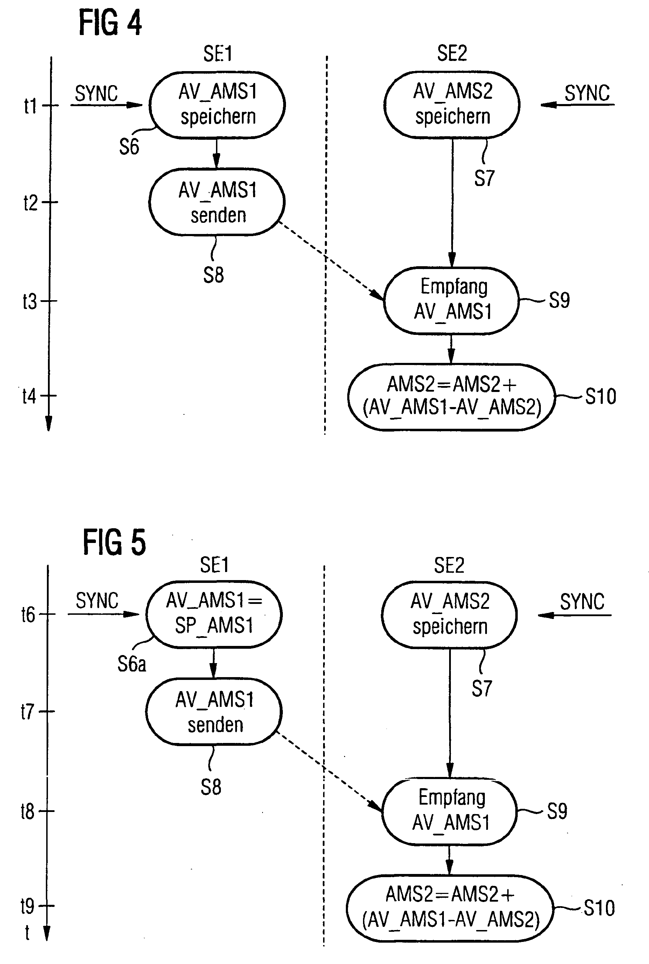

In Figur 4 ist ein Ablaufdiagramm zum Synchronisieren der ersten Steuereinrichtung SE1 und der zweiten Steuereinrichtung SE2 dargestellt. Die in der ersten Steuereinrichtung SE1 durchgeführten Schritte sind links der vertikalen gestrichelt gezeichneten Linie dargestellt, während die in der zweiten Steuereinrichtung SE2 durchgeführten Schritte rechts der vertikalen gestrichelten Linie dargestellt sind. Dabei ist aus der Figur 4 der zeitliche Ablauf (Zeit t) der jeweiligen Schritte erkenntlich.

Ein Schritt S6 wird in der ersten Steuereinrichtung ausgeführt sobald die erste Steuereinrichtung SE1 das Sychronisierungs-Signal SYNC zu einem Zeitpunkt t1 empfängt. Das Synchronisierungssignal SYNC wird aus der verlängerten Pulspause des Meßsignals MS abgeleitet, die durch die Lücke in dem Zahnrad hervorgerufen ist. Somit ist das Synchronisierungsmittel vorteilhaft in die Sensoreinrichtung integriert.

Bei Empfang des Synchronisierungs-Signals SYNC im Zeitpunkt t1 wird der aktuelle Wert AV_AMS1 des aufbereiteten ersten Meßsignals AMS1 in der ersten Steuereinrichtung SE1 gespeichert. Alternativ kann auch erst nach einer vorgegebenen Zeitdauer (z.B. 0,1 ms) nach dem Empfang des Synchronisierungssignals SYNC der dann aktuelle Wert des aufbereiteten ersten Meßsignals AV_AMS1 gespeichert werden.

Ebenfalls zum Zeitpunkt t1 empfängt die zweite Steuereinrichtung SE2 das Synchronisierungssignal SYNC und speichert entsprechend der ersten Steuereinrichtung SE1 entweder sofort oder nach der vorgegebenen Zeitdauer den Wert des aufbereiteten zweiten Meßsignals AV_AMS2.

Zum Zeitpunkt t2, der sich vorzugsweise direkt an die Beendigung des Schrittes S6 anschließt, sendet die erste Steuereinrichtung SE1 in einem Schritt S8 den Wert AV_AMS1 des aufbereiteten ersten Meßsignals AMS1 über den Bus 14 an die zweite Steuereinrichtung SE2. Zu einem Zeitpunkt t3 empfängt die zweite Steuereinrichtung SE2 in einem Schritt S9 den Wert AV_AMS1 des aufbereiteten ersten Meßsignals AMS1 im Zeitpunkt t1.

Zu einem Zeitpunkt t4 synchronisiert die zweite Steuereinrichtung SE2 das aufbereitete zweite Meßsignal AMS3 in einem Schritt S10. Dazu bildet sie vorzugsweise die Differenz der Werte AV_AMS1 und AV_AMS2 der aufbereiteten ersten und zweiten Meßsignale im Zeitpunkt t1 und addiert die Differenz zu dem aufbereiteten zweiten Meßsignal AMS2.

Damit sind dann die aufbereiteten ersten und zweiten Meßsignale AMS1 und AMS2 nach der Abarbeitung des Schrittes S9 in der zweiten Steuereinrichtung SE2 synchronisiert. Dadurch ist gewährleistet, daß in der zweiten Steuereinrichtung die von der ersten Steuereinrichtung gesendeten Steuerbefehle zum Öffnen oder Schließen der Gaswechselventile auch tatsächlich zu dem von der ersten Steuereinrichtung vorgegebenen Kurbelwellenwinkel durchgeführt werden.

Der Zeitpunkt t8 liegt vor einem erneuten Empfang des Synchronisierungssignals SYNC. So ist gewährleistet, dass der Wert AV_AMS2 zum selben Zeitpunkt erfasst wurde, wie der Wert AV_AMS1.

Figur 5 zeigt ein weiteres Ablaufdiagramm zum Synchronisieren der ersten und zweiten Steuereinrichtung SE1 und SE2, wobei der zeitliche Ablauf der Abarbeitung der Schritte S6a, S7, S8, S9, S10 der Abarbeitung der Schritte S6 bis S10 in Figur 4 entspricht, also der zeitliche Abstand der Zeitpunkte t1-t4 demjenigen der Zeitpunkte t6, t7, t8 und t9 entspricht.

In dem Zeitpunkt t6 wird das Synchronisierungssignal SYNC in der ersten Steuereinrichtung empfangen und dem aktuellen Wert AV_AMS1 des aufbereiteten ersten Meßsignals ein vorgegebener Sollwert SP_AMS1 des zweiten aufbereiteten Meßsignals zugeordnet. Dies hat den Vorteil, daß auch das aufbereitete Meßsignal der ersten Steuereinrichtung jeweils bei Empfang des Synchronisierungssignals synchronisiert wird.

Es können auch mehr als zwei Steuereinrichtungen vorgesehen sein. In diesem Fall sendet die erste Steuereinrichtung SE1 an alle anderen Steuereinrichtungen den Wert AV_AMS1 des aufbereiteten ersten Meßsignals, den es in dem vorgegebenen Zeitpunkt ab dem Empfang des Synchronisierungssignals in der ersten Steuereinrichtung hat, an alle anderen Steuereinrichtungen, die sich dann auf diesen Wert synchronisieren.

Ferner kann auch statt der Sensoreinrichtung die einen Winkelgeber umfaßt, eine Sensoreinrichtung vorgesehen sein, die einen inkrementalen Längen- oder Weggeber hat und dessen Meßaufnehmer ebenso ein Meßsignal erzeugt. Das Synchronisierungsmittel kann auch separat von der Sensoreinrichtung ausgebildet sein. Es umfaßt dann vorzugsweise einen Geber, der auf der Kurbelwelle 4 angeordnet ist und einen Meßaufnehmer, der stationär im Kurbelwellengehäuse angeordnet ist.

## Patentansprüche

1. Verfahren zum Synchronisieren von mindestens zwei Steuereinrichtungen,
- denen ein Kommunikationsmittel zugeordnet ist,
- denen eine Sensoreinrichtung zugeordnet ist, die einen inkrementalen Winkelgeber (5) oder einen Weggeber und einen Messaufnehmer (6) hat, der ein Messsignal (MS) erzeugt, aus dem ein Synchronisierungssignal (SYNC) abgeleitet wird, wobei
- in der ersten Steuereinrichtung (SE1) ein aufbereitetes erstes Messsignal (AMS1) durch Inkrementierung um einen Wert, abhängig von dem Messsignal (MS) erzeugt wird und
- in der zweiten Steuereinrichtung (SE2) ein aufbereitetes zweites Messsignal (AMS2) durch Inkrementierung um einen Wert, abhängig von dem Messsignal (MS) erzeugt wird, **dadurch gekennzeichnet, dass**
- die Steuereinheiten (SE1) und (SE2) nach Empfang des Synchronisierungssignals wahlweise den Wert(AV_AMS1, AV_AMS2) des jeweils aufbereiteten ersten und zweiten Messsignals (AMS 1, AMS 2) sofort oder nach einer vorgegebenen Zeitdauer abspeichern
- der Wert (AV_AMS1) des aufbereiteten ersten Messsignals (AMS1), den es beim oder nach dem Empfang des Synchronisierungssignals (SYNC) durch die erste Steuereinrichtung (SE1) aufweist, an die zweite Steuereinrichtung (SE2) gesendet wird und dass
- der Wert (AV_AMS2) des aufbereiteten zweiten Messsignals (AMS2), den es beim oder nach dem Empfang desselben Synchronisierungssignals (SYNC) durch die zweite Steuereinrichtung (SE2) aufweist, mit dem Wert (AV_AMS1) des aufbereiteten ersten Messsignals (AMS1) eine Differenz bildet, die zu dem aufbereiteten zweiten Messsignal (AMS2) zur Synchronisierung addiert wird.

2. Verfahren nach Anspruch 1, **dadurch gekennzeichnet, dass**
- der Wert (AV AMS1) des aufbereiteten ersten Messsignals (AMS1), den es beim oder nach dem Empfang des Synchronisierungssignals (SYNC) durch die erste Steuereinrichtung (SE1) aufweist gleich einem Sollwert (SP_AMS1) gesetzt wird,
- der Sollwert (SP_AMS1) des aufbereiteten ersten Messsignals (AMS1), den es beim oder nach dem Empfang des Synchronisierungssignals (SYNC) durch die erste Steuereinrichtung (SE1) aufweist, an die zweite Steuereinrichtung (SE2) gesendet wird,
- die zweite Steuereinrichtung (SE2) das aufbereitete zweite Messsignal (AMS2) synchronisiert abhängig von dem Sollwert (SP_AMS1), dem Wert (AV_AMS2) und dem Wert des aufbereiteten Messsignals (AMS2), den dieser zum Synchronisierungszeitpunkt in der Steuereinheit (SE2) aufweist.

## Claims

1. Method for synchronizing at least two control devices,
- to which a communication means is assigned,
- to which a sensor device is assigned which has an incremental angle encoder (5) or a position encoder and a measuring sensor (6) which generates a measuring signal (MS), from which a synchronization signal (SYNC) is derived,
- a conditioned first measuring signal (AMS1) being generated in the first control device (SE1) by incrementing by a value, as a function of the measuring signal (MS), and
- a conditioned second measuring signal (AMS2) being generated in the second control device (SE2) by incrementing by a value, as a function of the measuring signal (MS), **characterized in that**
- after reception of the synchronization signal, the control units (SE1) and (SE2) alternatively store the value (AV_AMS1, AV_AMS2) of the respectively conditioned first and second measuring signal (AMS 1, AMS 2) immediately or after a predefined time period
- the value (AV_AMS1) of the conditioned first measuring signal (AMS1) which it has upon or after the reception of the synchronization signal (SYNC) by the first control device (SE1) is transmitted to the second control device (SE2), and **in that**
- the value (AV_AMS2) of the conditioned second measuring signal (AMS2) which it has upon or after the reception of the same synchronization signal (SYNC) by the second control device (SE2) forms a difference with the value (AV_AMS1) of the conditioned first measuring signal (AMS1), which difference is added to the conditioned second measuring signal (AMS2) for synchronization.

2. Method according to Claim 1, **characterized in that**
- the value (AV_AMS1) of the conditioned first measuring signal (AMS1) which it has upon or after the reception of the synchronization signal (SYNC) by the first control device (SE1) is set to be equal to a setpoint value (SP_AMS1),
- the setpoint value (SP AMS1) of the conditioned first measuring signal (AMS1) which it has upon or after the reception of the synchronization signal (SYNC) by the first control device (SE1) is transmitted to the second control device (SE2),
- the second control device (SE2) synchronizes the conditioned second measuring signal (AMS2) as a function of the setpoint value (SP_AMS1), of the value (AV_AMS2) and of the value of the conditioned measuring signal (AMS2) which said measuring signal (AMS2) has at the time of synchronization in the control unit (SE2).

## Revendications

1. Procédé pour la synchronisation d'au moins deux dispositifs de commande,
- auxquels est associé un moyen de communication,
- auxquels est associé un dispositif capteur qui possède un émetteur angulaire incrémental (5) ou un émetteur de course et un récepteur de mesure (6) qui produit un signal de mesure (MS) d'où est dérivé un signal de synchronisation (SYNC), cependant que
- un premier signal de mesure traité (AMS1) est produit dans le premier dispositif de commande (SE1) en fonction du signal de mesure (MS) par incrémentation d'une valeur, et
- dans le deuxième dispositif de commande (SE2) en fonction du signal de mesure (MS), par incrémentation d'une valeur, **caractérisé en ce que**
- après la réception du signal de synchronisation, les unités de commande (SE1) et (SE2), mémorisent sélectivement la valeur (AV_AMS1, AV_AMS2) du premier ou deuxième signal de mesure traité (AMS1, AMS2), soit immédiatement, soit après écoulement d'un laps de temps prédéterminé,
- la valeur (AV_AMS1) du premier signal de mesure traité (AMS1) qu'il présente lors de la réception ou après la réception du signal de synchronisation (SYNC) par le premier dispositif de commande (SE1) est envoyée au deuxième dispositif de commande (SE2) et **en ce que**
- la valeur (AV_AMS2) du deuxième signal de mesure traité (AMS2) qu'il présente lors de la réception ou après la réception du même signal de synchronisation (SYNC) par le deuxième dispositif de commande (S2) forme avec la valeur (AV_AMS1) du premier signal de mesure traité (AMS1), une différence qui est ajoutée au deuxième signal de mesure traité (AMS2) pour assurer la synchronisation.

2. Procédé selon la revendication 1, **caractérisé en ce que**
- la valeur (AV_AMS1) du premier signal de mesure traité (AMS1) qu'il présente lors de la réception ou après la réception du signal de synchronisation (SYNC) par le premier dispositif de commande (SE1) est posée égale à une valeur de consigne (SP_AMS1),
- la valeur de consigne (SP_AMS1) du premier signal de mesure traité (AMS1) qu'il présente lors de la réception ou après la réception du signal de synchronisation (SYNC) par le premier dispositif de commande (SE1) est envoyée au deuxième dispositif de commande (SE2) ;
- le deuxième dispositif de commande (SE2) synchronise le deuxième signal de mesure traité (AMS2) en fonction de la valeur de consigne (SP_AMS1), de la valeur (AV_AMS2) et de la valeur du signal de mesure traité (AMS2), que celui-ci présente à l'instant de la synchronisation dans le dispositif de commande (S2).
